(19) Europäisches Patentamt
European Patent Office
Office européen des brevets

(11) EP 1 046 672 A1

(12) EUROPEAN PATENT APPLICATION
published in accordance with Art. 158(3) EPC

(43) Date of publication:
**25.10.2000 Bulletin 2000/43**

(21) Application number: **99951142.1**

(22) Date of filing: **29.10.1999**

(51) Int. Cl.$^7$: **C08K 9/04**, C08L 75/04

(86) International application number:
**PCT/JP99/06005**

(87) International publication number:
**WO 00/26289 (11.05.2000 Gazette 2000/19)**

(84) Designated Contracting States:
**AT BE CH CY DE DK ES FI FR GB GR IE IT LI LU MC NL PT SE**

(30) Priority: **30.10.1998 JP 32617098**

(71) Applicant:
**Kyowa Chemical Industry Co., Ltd.**
**Takamatsu-shi, Kagawa 761-0113 (JP)**

(72) Inventors:
- **TAKAHATA, Harumi,**
  **Kyowa Chemical Industry Co. Ltd.**
  **Takamatsu-shi, Kagawa-ken 761-0113 (JP)**
- **KATSUKI, Keiko,**
  **Kyowa Chemical Industry Co. Ltd.**
  **Takamatsu-shi, Kagawa-ken 761-0113 (JP)**

(74) Representative:
**Woods, Geoffrey Corlett**
**J.A. KEMP & CO.**
**Gray's Inn**
**14 South Square**
**London WC1R 5LX (GB)**

# (54) INHIBITORS AGAINST DETERIORATION BY CHLORINE AND POLYURETHANE COMPOSITIONS

(57) An inhibitor of deterioration by chlorine, which is obtained by surface-treating a hydrotalcite compound with an alcohol phosphate ester of the formula (1) or the formula (2), or its dialcoholamine salt or alkaline metal salt,

$$(RO)_n \overset{\overset{\displaystyle O}{\|}}{P}-[OH\cdot NH(R'OH)_2]_{3-n} \qquad (1)$$

wherein R is an alkyl or alkenyl group having 10 to 30 carbon atoms, R′ is an alkylene group having 1 to 6 carbon atoms and n is 1 or 2,

$$(RO)_n \overset{\overset{\displaystyle O}{\|}}{P}-[OM]_{3-n} \qquad (2)$$

wherein R has the same meaning as in the formula (1), and M is an alkaline metal or hydrogen, and a polyurethane composition containing the above inhibitor.

EP 1 046 672 A1

## Description

Technical Field

The present invention relates to an inhibitor of deterioration by chlorine and a polyurethane composition containing the above inhibitor. More specifically, the present invention relates to a deterioration inhibitor useful for a polyurethane elastic fiber, a polyurethane film and a polyurethane molded article, which inhibitor prevents a deterioration in various chlorinated water environments, and a polyurethane composition containing the above inhibitor. That is, the present invention relates to an inhibitor of deterioration by chlorine, which can be used in chlorinated water environments, which is excellent in resistance and stability to, for example, water sterilized with chlorine, which causes no swelling at a time of an immersion treatment in chlorinated water, which is excellent in mechanical strengths such as a high-degree rubber elasticity, tensile strength and recoverability and also excellent in thermal behavior, which is capable of a stable spinning for a long period of time, which causes no discoloration in a treatment step with a tannic solution and which causes no swelling at a time of an immersion treatment in chlorine, and a polyurethane composition containing the above inhibitor.

Technical Background

A polyurethane elastic fiber obtained from 4,4'-diphenylmethanediisocyanate, a polyhydroxy polymer having a relatively low polymerization degree and a polyfunctional active-hydrogen-containing compound has a rubber elasticity in a high degree, has excellent mechanical properties such as tensile strength and recoverability and also has excellent properties with regard to thermal behavior. Therefore, much attention has been focused on it as a functional fiber material for a foundation, socks and sportswear.

However, it is known that when a product mainly made of a segmented polyurethane in a long-chain state, like above, is washed by using a chlorine bleaching, the segmented polyurethane deteriorates in physical properties at a considerable degree. Further, the following fact is also well known. When a swimwear made of a polyurethane elastic yarn and a polyamide yarn is exposed in chlorinated water having an active chlorine concentration of 0.5 to 3 ppm in a swimming pool, the polyurethane elastic yarn deteriorates in physical properties and a dye attached to the polyamide yarn is discolored.

Hence, with regard to a swimwear mostly used in a swimming pool, there is mainly used a polyurethane using a polyester excellent in resistance to chlorine owing to molecular bonding as a polyhydroxy polymer having a low polymerization degree for improving the polyurethane elastic yarn in resistance to chlorine. But, an aliphatic polyester has a high biological activity, and a polyester-containing polyurethane has a defect that it is likely to be moldy. Further, its chlorine resistance is not sufficient. In these days, widely, a treatment is further carried out with a tannic solution after a dyeing treatment, as a method for preventing the discoloration of a dye by chlorine.

There have been proposed various additives with regard to the improvement of resistance to deterioration of the polyurethane elastic yarn caused by chlorine. For example, JP-A-57-29609 publication discloses zinc oxide. However, the zinc oxide has a remarkable defect that zinc oxide is removed from a filament by washing during a dyeing step of a fabric especially under acid conditions (pH 3 to 4). As a result, the fiber is remarkably decreased in resistance to chlorinated water. Further, zinc-containing-wastewater generated from the dyeing step deadens a bacteria culture medium in a biological-activity-cleansing plant. As a result, the operation manner of the above cleansing plant is heavily damaged. For obtaining a polyurethane composition which overcomes these defects, Japanese patent application 58-6584 (JP-A-59-133248), Japanese patent application 2-92986 (JP-A-3-292364) and Japanese patent application 3-243446 (JP-A-5-78569) report that chlorine resistance is improved with a hydrotalcite. When the hydrotalcite is dispersed in a polyurethane elastic yarn, the hydrotalcite in this state has excellent acid-resistance at an acid dyeing treatment (pH = 3 to 4).

However, the hydrotalcite includes a hydrotalcite which is not surface-treated (JP-A-59-133248), a hydrotalcite which is surface-treated with a silane-coupling agent (JP-A-3-292364), a hydrotalcite which is treated with a fatty acid (JP-A-5-78569) and the like. It is found that magnesium and aluminum contained in hydrotalcite are eluted at an acetic acid treatment time in a dyeing treatment step under the state in which the hydrotalcite is dispersed in a polyurethane elastic yarn, so that the chlorine resistance is decreased. Therefore, a chlorine-resistant agent having excellent acid resistance has been required.

It is an object of the present invention to provide an inhibitor of deterioration by chlorine that can give a polyurethane product, such as a polyurethane fiber, which product shows excellent acid-resistance, which product is capable of a stable spinning for a long period of time, which product is free of a discoloration at a tannic solution treatment step and swelling at an immersion in chlorinated water and which product has excellent chlorine-resistance, when incorporated into a polyurethane composition, and a polyurethane composition containing the above inhibitor.

Disclosure of the Invention

The present inventors have made diligent studies, and as a result, the present inventors have found the following.

An inhibitor of deterioration by chlorine which has excellent acid-resistance can be obtained by surface-treating a hydrotalcite compound with an alcohol phosphate ester of the formula (1) or the formula (2), or its dialcoholamine salt or alkaline metal salt,

$$(RO)_n\overset{\overset{\displaystyle O}{\|}}{P}-[OH\cdot NH(R'OH)_2]_{3-n} \qquad (1)$$

wherein R is an alkyl or alkenyl group having 10 to 30 carbon atoms, R' is an alkylene group having 1 to 6 carbon atoms and n is 1 or 2,

$$(RO)_n\overset{\overset{\displaystyle O}{\|}}{P}-[OM]_{3-n} \qquad (2)$$

wherein R and n have the same meanings as those in the formula (1), and M is an alkaline metal or hydrogen.

Further, by incorporating 0.1 to 10 parts by weight of the above deterioration-by-chlorine inhibitor per 100 parts by weight of a polyurethane, the present invention provides a polyurethane composition that can give a polyurethane fiber which is capable of a stable spinning for a long period of time, which is free of a discoloration at a tannic solution treatment step and swelling at a immersion time in chlorinated water and which has excellent chlorine-resistance, a film and a molded article.

Preferred Embodiment for Practicing the Invention

The polyurethane composition of the present invention shows almost no damage in terms of a chlorine-resistance stabilizing effect when a tannic solution treatment is further carried out after dyeing, so that it is extremely usable as a material for a swimwear which is repeatedly used in a pool containing chlorine for a long period of time.

Further, as a material for a fiber product used in chlorinated water, furthermore as a functional material for a clothing such as a foundation, socks and sportswear and as a film, elastomer and a film material, the present invention provides a product which has an excellent rubber elasticity at a high degree and is excellent in mechanical properties such as tensile strength and recoverability and thermal behavior.

When the hydrotalcite compound is surface-treated, the amount of a surface-treating agent based on the hydrotalcite compound is 0.5 to 10 % by weight, preferably 1 to 8 % by weight. When the amount of the surface-treating agent is lower than the above lower limit, the improvement effects of water-resistance and acid-resistance are not sufficient. Further, the amount of the surface-treating agent is higher than the above upper limit, the improvement effects of water-resistance and acid-resistance are not further increased but a polyurethane composition containing the deterioration-by-chlorine inhibitor is reversely decreased in mechanical strengths such as tensile strength and recoverability and chlorine-resistance.

In the method of surface-treating the hydrotalcite compound with the surface-treating agent, the hydrotalcite compound is suspended in water in advance, the suspension of the hydrotalcite compound is kept at a temperature higher than a temperature at which the surface-treating agent is soluble, an aqueous solution of the surface-treating agent is added with stirring and further, the both of them are fully mixed. It is assumed that the surface-treating agent is dissociated in a water medium, to generate

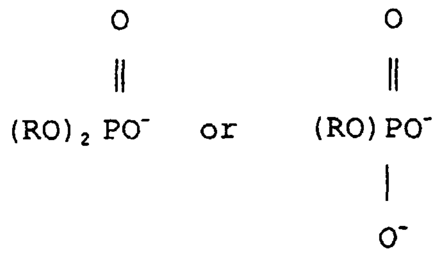

, it is bonded to a metal atom on the surface of the hydrotalcite compound and covers the surface of the hydrotalcite compound, and an oleophilic RO group projecting on the surface enables strong resistances to water and acid. When the surface-treating agent is added to the hydrotalcite compound, the bonded amount of the surface-treating agent based on the added amount thereof is generally as follows. When the surface-treating agent is a dialcoholamine salt, the bonded amount is generally 70 to 90 % by weight based on the added amount. When the surface-treating agent is an alkaline metal salt, it is about 95 % by weight based on the added amount. The surface-treated hydrotalcite compound slurry is subsequently dehydrated, dried and pulverized or it is dehydrated, granulated and dried, whereby it is converted to be in a state in which it can be filled into a resin.

The hydrotalcite compound used in the present invention is preferably a hydrotalcite compound having a crystal which is grown well and having little aggregation for attaining a good moldability, mechanical strengths and chlorine-resistance. There is preferably used a hydrotalcite compound having a BET specific surface area in a range of from 3 to 30 $m^2$/g, particularly preferably 5 to 20 $m^2$/g, and an average secondary particle diameter in a range of from 0.1 to 5 μm, particularly preferably 0.3 to 3 μm. When the average secondary particle diameter is smaller than the lower limit of the above range, the moldability, mechanical strengths, water resistance and acid resistance of a polyurethane are decreased. When it is larger than the upper limit of the above range, the chlorine-resistance and tensile strength are decreased.

The deterioration-by-chlorine inhibitor of the present invention may contain generally-used additives other than the above components. Examples of these additives include an ultraviolet absorbent, an antioxidant, a photostabilizer, a gas-resisting stabilizer, a colorant, a delustering agent and a filler.

The above surface-treated hydrotalcite compound is generally added into a polyurethane polymer solution obtained by reacting a prepolymer of polyurethane with a chain-extending agent. Further, it may be added into these agents in advance, or it may be added during a polymerization.

The polyurethane used in the present invention (to be sometimes referred to as "segmented polyurethane" hereinafter) is mainly composed of a substantively linear polymer having a hydroxyl group in both terminals and having a molecular weight of 600 to 4,000, such as a polyesterdiol formed of a homo- or co-polymer, polyetherdiol, polyesteramidodiol, polycarbonatediol, polyacryldiol, polythioesterdiol, polythioetherdiol, polyhydrocarbondiol, mixtures of these or copolymer of these, an organic diisocyanate and a chain-extending agent having a polyfunctional active hydrogen atom, such as polyol, polyamine, hydroxylamine, hydrazine, polyhydrazide, polysemicarbazide, water or mixtures of these.

In the polyurethane composition obtained in the present invention, a spinning solution dissolved in polar solvents, such as dimethylacetamide, dimethylformamide and dimethylsulfoxide, is almost free of an increase of a discharging pressure and the break of a yarn at a spinning step so that it can be stably spun for a long period of time. An elastic fiber obtained from the polyurethane compound of the present invention shows excellent resistance to the deterioration caused by chlorine. Besides it, no discoloration of a polyurethane elastic yarn occurs even when the tannic solution treatment is carried out, and no swelling of the yarn occurs in chlorinated water. That is, the polyurethane elastic yarn according to the present invention does not harm a stabilization effect on chlorine, even when the tannic solution treatment is further carried out after dyeing. Therefore, it is extremely usable for a swimming material which is repeatedly worn in a pool containing chlorine for a long period of time.

Measurement methods

BET specific surface area: measured by a liquid nitrogen absorption method.

Average secondary particle diameter: 1 % by weight aqueous slurry of a hydrotalcite compound was dispersion-treated with ultrasonic wave for 3 minutes and then measured with a microtrac (supplied by Nikkiso K.K)

Acid-resistance: 0.50 g of a sample was immersed in 5 ml of ethyl alcohol, 50 ml of a tannic acid aqueous solution of 1 mol/liter was added to this, the mixture was shaken at 30 °C for 1 hour and then a filtrate was measured for concentrations of Mg, Al and Zn.

Test for a chlorine-resistance evaluation

200 pieces of a 40-denier yarn was skeined, then arranged and cut so as to have a length of about 10 cm, and strongly bound in the center thereof with a cotton string, to prepare a test yarn. The test yarn was immersed in boiled water arranged with acetic acid and sodium acetate so as to have a pH of 3.5 for 1 hour and then washed with running water for 10 minutes. Further, a liquor was obtained by adding 4.5 g of tannic acid (supplied by Dainihonseiyaku K.k.) and 2.7 g of acetic acid into 6 liters of ion-exchanged water, and when the above treatment liquor was at 25 °C, the test yarn was added therein. Then, the treatment liquor was temperature-increased up to 50 °C and an immersion treatment was carried out for 30 minutes while keeping a temperature of 50 °C. The immersion-treated test yarn was washed with running water for 10 minutes, and then dried with wind for one day at 20 °C. A sodium hypochlorite liquor was diluted with ion-exchanged water so as to have an effective chlorine concentration of 3 ppm and arranged with hydrochloric acid so as to have pH of about 7, to prepare a liquor. The above-treated yarn was immersed in this liquor at a liquor temperature of 30°C with extending the yarn by 50 %. With passage of time, a sample was taken out and measured for a strength retaining ratio each. Evaluation was carried out by a time taken before the strength retaining ratio became 50 %.

$$\text{Strength retaining ratio} = TS/TS_0 \times 100(\%),$$

wherein TS is a strength after the immersion treatment and $TS_0$ is a strength before the immersion treatment.

The present invention will be explained more specifically with reference to Examples hereinafter, in which "part" stands for "part by weight" and "%" stands for "% by weight" unless otherwise specified.

Example 1

2 kg of a hydrotalcite compound of $Mg_{4.5}Al_2(OH)_{13}CO_3 \cdot 3.5H_2O$ (BET specific surface area: 10.5 $m^2$/g, average secondary particle diameter: 0.4 µm) was uniformly dispersed in 10 liters of water with a chemistirrer and then heated up to 80°C. Differently, 23 g, which corresponded to 1 % based on the hydrtalcite compound, of a sodium salt of distearyl alcohol phosphate ester,

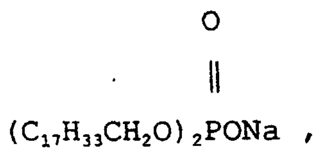

was dissolved in 1 liter of heated water of 80 °C. The aqueous solution was added to the above slurry of the hydrotalcite compound with stirring. It was surface-treated by continuing stirring further enough. Then, the resultant mixture was dehydrated under a reduced pressure, then dried and pulverized, to obtain a sample. The sample was measured for acid-resistance. Table 1 shows the measured results.

Further, 133.3 parts of polytetramethylene glycol having an average molecular weight of 1,600 and 31.2 parts of 4,4'-diphenylmethanediisocyanate were allowed to react under a current of a nitrogen gas for 90 minutes with stirring, to obtain a prepolymer containing a remained isocyanate group. Then, the prepolymer was cooled to room temperature, and the cooled prepolymer was added and dissolved to/in 270 parts of dried dimethylformamide, to obtain a prepolymer solution.

On the other hand, 2.34 parts of ethylenediamine and 0.37 part of diethylamine were dissolved in 157 parts of dried dimethylformamide. To this was added the above prepolymer solution at room temperature, to give a polyurethane solution having a viscosity of 1,500 poise at 30°C. To the so-obtained viscous polymer solution were added 4 % of titanium dioxide, 2 % of 4,4'-butylidene-bis(3-methyl-6-t-butylphenol), 0.7 % of 2-(2'-hydroxy-3'-t-butyl-5'-methylphenyl)-5-chloro-benzotriazole and an inhibitor of deterioration by chlorine, shown in Table 1. The polymer solution was dry-spun at a spinning rate of 400 m/min, to obtain a 40-denier yarn of 6 filaments. The treated hydrotalcite compound used in the present invention had no break of a yarn in a spinning of 30 minutes. Table 2 shows the results of chlorine-resistance evaluations.

Examples 2 and 3

Tests were carried out in the same manner as in Example 1 except that the amount of the surface-treating agent based on the hydrotalcite compound was changed to an amount shown in Table 1. Table 1 and Table 2 show the results.

Example 4

A test was carried out in the same manner as in Example 1 except that the hydrotalcite compound was replaced with $Mg_3ZnAl_2(OH)_{12}CO_3 \cdot 2H_2O$ and that the amount of the surface-treating agent was changed to 3 %. Table 1 and Table 2 show the results.

Example 5

A test was carried out in the same manner as in Example 1 except that the hydrotalcite compound was replaced with $Zn_4Al_2(OH)_{12}CO_3 \cdot 3H_2O$ (a BET specific surface area: 9 $m^2$/g, an average secondary particle diameter: 1.1 μm) and that the amount of the surface-treating agent was changed to 3 %. Table 1 and Table 2 show the results.

Example 6

A hydrotalcite compound of $(Li_{0.8}Mg_{0.1}Zn_{0.1})Al_2(OH)_{6.0}(CO_3)_{0.6} \cdot 1.2H_2O$ (a BET specific surface area: 9.5 $m^2$/g, an average secondary particle diameter: 0.7 μm) was treated in the same manner as in Example 1, and a test was carried out by the same operation as in Example 1. Table 1 and Table 2 show the results.

Comparative Example 1

A hydrotalcite compound of $Mg_{4.5}Al_2(OH)_{13}CO_3 \cdot 3.5H_2O$ (BET specific surface area: 10.5 $m^2$/g, an average secondary particle diameter: 0.4 μm) was used as a sample without surface-treatment and tested for acid resistance. Table 1 and Table 2 show the results.

Comparative Example 2

A hydrotalcite compound of $Mg_{4.5}Al_2(OH)_{13}CO_3 \cdot 3.5H_2O$ (BET specific surface area: 10.5 $m^2$/g, average secondary particle diameter: 0.4 μm) was dispersed in water. To this was added a stearic acid in an amount of 1 % based on the hydrotalcite compound, and the mixture was melt under heat with stirring. The resultant mixture was dehydrated, dried and pulverized, to obtain a sample. The sample was measured for water resistance and acid resistance. Table 1 and Table 2 show the results.

Comparative Example 3

A test was carried out in the same manner as in Comparative Example 2, except that the amount of stearic acid based on the hydrotalcite compound was changed to 3 %. Table 1 and Table 2 show the results.

Comparative Example 4

$Mg_3ZnAl_2(OH)_{12}CO_3 \cdot 2H_2O$ was used as a hydrotalcite compound. A test was carried out without surface-treatment. Table 1 and Table 2 show the results.

Comparative Example 5

The same hydrotalcite compound as that in Comparative Example 4 was surface-treated with 3 % of stearic acid in the same manner as in Comparative Example 2, and then tested. Table 1 and Table 2 show the results.

Comparative Example 6

The same hydrotalcite compound as that used in Example 5 was surface-treated with 3 % of stearic acid in the same manner as in Comparative Example 2, and then tested. Table 1 and Table 2 show the results.

Table 1

| | Surface-treating agent | | Acid resistance | | | |
|---|---|---|---|---|---|---|
| | kind | Amount (%) | Diluted Mg(ppm) | Diluted Al(ppm) | Diluted Zn(ppm) | Diluted Li(ppm) |
| | | | | | | |
| Ex.1 | A | 1 | 935 | 533 | - | - |
| Ex.2 | A | 3 | 744 | 357 | - | - |
| Ex.3 | A | 6 | 268 | 170 | - | - |
| Ex.4 | A | 3 | 501 | 410 | 370 | - |
| Ex.5 | A | 3 | | 451 | 921 | - |
| Ex.6 | A | 3 | 102 | 390 | 87 | 620 |
| CEx.1 | - | - | 1,540 | 883 | - | - |
| CEx.2 | B | 1 | 1,291 | 745 | - | - |
| CEx.3 | B | 3 | 1,273 | 727 | - | - |
| CEx.4 | - | - | 1,003 | 823 | 679 | - |
| CEx.5 | B | 3 | 740 | 643 | 550 | - |
| CEx.6 | B | 3 | | 646 | 1,507 | - |

notes:
A: a sodium salt of distearyl alcohol phosphate ester,
B: stearic acid,
Ex. = Example,
CEx. = Comparative Example.

Table 2

| | Chlorine resistance | | Chlorine resistance |
|---|---|---|---|
| Ex.1 | 123 | CEx.1 | 27 |
| Ex.2 | 130 | CEx.2 | 105 |
| Ex.3 | 151 | CEx.3 | 107 |
| Ex.4 | 121 | CEx.4 | 25 |
| Ex.5 | 135 | CEx.5 | 101 |
| Ex.6 | 129 | CEx.6 | 98 |

Notes:
chlorine resistance is represented by a half-life time of strength,
unite: hours,
Ex. = Example,
CEx. = Comparative Example.

Industrial Utilities

According to the present invention, there are provided an inhibitor of deterioration by chlorine, that can give a polyurethane composition which is free of a deterioration in physical properties and a decrease in solid state properties such as a discoloration and a swelling of a fiber by a chlorine-containing water, etc., and is excellent in resistance

to chlorine-deterioration and a polyurethane composition containing the inhibitor of deterioration by chlorine. According to the present invention, there are further provided products excellent in resistance to chlorine-deterioration, such as a polyurethane fiber, a film, and a molded article.

**Claims**

1. An inhibitor of deterioration by chlorine, which is obtained by surface-treating a hydrotalcite compound with an alcohol phosphate ester of the formula (1) or the formula (2), or its dialcoholamine salt or alkaline metal salt,

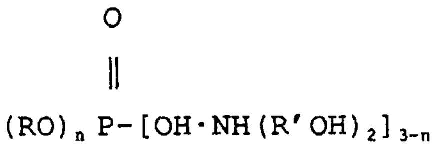

(1)

wherein R is an alkyl or alkenyl group having 10 to 30 carbon atoms, R′ is an alkylene group having 1 to 6 carbon atoms and n is 1 or 2,

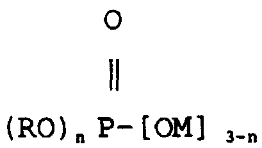

(2)

wherein R has the same meaning as in the formula (1), and M is an alkaline metal or hydrogen.

2. An inhibitor of deterioration by chlorine according to claim 1, wherein the hydrotalcite compound is surface-treated with 0.5 to 10 % by weight of the alcohol phosphate ester of the formula (1) or the formula (2), or its dialcoholamine salt or alkaline metal salt.

3. An inhibitor of deterioration by chlorine according to claim 1, wherein the hydrotalcite compound is a compound of the formula (3),

$$(Mg_yZn_z)_{1-x}Al_x(OH)_2 \cdot (CO_3)_{x/2} \cdot mH_2O \qquad (3)$$

wherein x, y, z and m are numbers in the following ranges of $0 < x \leqq 0.5$, $0 \leqq y \leqq 1$, $0 \leqq z \leqq 1$, $y + z = 1$ and $0 \leqq m \leqq 1$.

4. An inhibitor of deterioration by chlorine according to claim 1, wherein the hydrotalcite compound is a compound of the formula (4),

$$(Li_aMg_bZn_c)Al_2(OH)_{6+(a+2b+2c-2d)}(CO_3)_d \cdot mH_2O \qquad (4)$$

wherein a, b, c, d and m are numbers in the following ranges of $0 < a \leqq 1$, $0 \leqq b \leqq 0.5$, $0 \leqq c \leqq 0.5$, $0 \leqq a + 2b + 2c \leqq 1.2$ , $0 < d \leqq 0.6$ and $0 \leqq m \leqq 1$.

5. An inhibitor of deterioration by chlorine according to claim 1, wherein the hydrotalcite compound has a BET specific surface area of 3 to 30 $m^2/g$ and an average secondary particle diameter of 0.1 to 5 μm.

6. A polyurethane composition containing 0.1 to 10 parts by weight, per 100 parts by weight of polyurethane, of the inhibitor of deterioration by chlorine, recited in claim 1.

## INTERNATIONAL SEARCH REPORT

International application No.
PCT/JP99/06005

A. CLASSIFICATION OF SUBJECT MATTER
Int.Cl$^7$ C08K9/04, C08L75/04

According to International Patent Classification (IPC) or to both national classification and IPC

B. FIELDS SEARCHED

Minimum documentation searched (classification system followed by classification symbols)
Int.Cl$^7$ C08K3/00-C08K13/08, C08L1/00-101/16

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| A | WO, 9306173, A (ASAHI CHEM IND CO LTD), 01 April, 1993 (01.04.93), Claims & JP, 05-078569, A Claims & EP, 558758, A1 | 1-6 |
| A | JP, 4-63869, A (Sekisui Chemical Co., Ltd.), 28 February, 1992 (28.02.92), Claims (Family: none) | 1-6 |
| A | JP, 63-265960, A (Asahi Glass Co., Ltd.), 02 November, 1988 (02.11.88), Claims (Family: none) | 1-6 |
| A | JP, 59-133248, A (Asahi Chemical Industry Co., Ltd.), 31 July, 1984 (31.07.84), Claims (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 January, 2000 (18.01.00) | 25 January, 2000 (25.01.00) |
| Name and mailing address of the ISA/ Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP99/06005

C (Continuation). DOCUMENTS CONSIDERED TO BE RELEVANT

| Category* | Citation of document, with indication, where appropriate, of the relevant passages | Relevant to claim No. |
|---|---|---|
| A | JP, 3-292364, A (Asahi Chemical Industry Co., Ltd.), 24 December, 1991 (24.12.91), Claims (Family: none) | 1-6 |

Form PCT/ISA/210 (continuation of second sheet) (July 1992)